# EUROPÄISCHE PATENTSCHRIFT

(11) **EP 2 296 926 B1**
(45) Veröffentlichungstag und Bekanntmachung des Hinweises auf die Patenterteilung: **19.09.2012**
(21) Anmeldenummer: 09757305.9
(22) Anmeldetag: 05.06.2009
(51) Int. Cl.: B60K 7/00, B60K 17/356, B60K 23/08, F16H 61/42

(54) **STEUERUNGSANORDNUNG FÜR FAHRZEUGE MIT HYDROSTATISCHEM ZUSATZANTRIEB**
CONTROL ARRANGEMENT FOR VEHICLES HAVING A HYDROSTATIC AUXILIARY DRIVE
DISPOSITIF DE COMMANDE POUR VÉHICULES À ENTRAÎNEMENT HYDROSTATIQUE AUXILIAIRE

(30) Priorität: 07.06.2008 DE 102008027333
(43) Veröffentlichungstag der Anmeldung: 23.03.2011
(73) Patentinhaber: CNH Baumaschinen GmbH, 13581 Berlin (DE)
(72) Erfinder: LAUTNER, Erik, 14667 Postdam (DE); WEBER, Jürgen, 01139 Dresden (DE); NEUBERT, Thomas, 01594 Hirschstein (DE)
(74) Vertreter: Meinke, Dabringhaus und Partner GbR
(86) Internationale Anmeldenummer: PCT/EP2009/004028
(87) Internationale Veröffentlichungsnummer: WO 2009/146922

(56) Entgegenhaltungen:
- DE-A1- 3 842 405
- DE-B4- 10 101 748
- DE-C2- 4 210 251
- DE-U1-202005 016 404
- JP-A- 63 258 223
- JP-U- 2 070 049
- JP-U- 63 126 132
- US-A- 4 444 286
- US-A- 5 420 791
- US-A- 5 564 519
- US-A1- 2006 065 465
- US-B2- 6 644 429

## Beschreibung

Die Erfindung betrifft eine Steuerungsanordnung für Fahrzeuge mit hydrostatischem Zusatzantrieb für eine oder mehrere Achsen, insbesondere für Grader, mit den Merkmalen des Oberbegriffes des Patentanspruches 1.

Bestimmte mobile Arbeitsmaschinen, wie z.B. Grader, werden gegenwärtig von einem Dieselmotor, zukünftig eventuell auch von anderen Motoren, und einem Getriebe über die Hinterräder angetrieben. Als Getriebe kommen dabei Lastschaltgetriebe mit Wandler oder parallelen Kupplungen, Getriebe mit kontinuierlich verstellbarer Übersetzung mit hydrostatischer, mechanischer oder elektrischer Leistungsübertragung oder leistungsverzweigte Getriebe mit mechanisch-hydrostatischer oder mechanisch-elektrischer Verzweigung zum Einsatz.

Zusätzlich zu diesem Hauptantrieb auf die Hinterachse wird optional ein hydraulischer Vorderradantrieb eingesetzt. Damit soll einerseits eine Stabilisierung dieser recht lang bauenden Maschine im Arbeitseinsatz erreicht werden, andererseits kann dadurch besonders bei ungünstigen Bodenverhältnissen (z.B. Schlamm, Schnee oder Eis) mehr Traktionskraft auf den Untergrund übertragen und damit die Zugkraft bzw. die Leistungsfähigkeit der Maschine erhöht werden.

Für den hydraulischen Vorderradantrieb kommen heute unterschiedliche Antriebssysteme zur Anwendung. Sie unterscheiden sich im Wesentlichen durch die Anzahl der Hydraulikpumpen (Einkreis- oder Zweikreissystem) und durch die Verwendung von Hydraulikmotoren ohne oder mit Radgetriebe (Langsam- oder Schnellläufer).

Eine Steuerungsanordnung mit den Merkmalen des Oberbegriffes des Patentanspruches 1 ist aus DE 42 10 251 C2 bekannt. Diese Anordnung ist ein Einkreissystem und verwendet nur eine Pumpe, die beiden Hydraulikmotoren sind parallel angeordnet. Um ein einseitiges Durchrutschen eines Vorderrades zu vermeiden, wird ein Volumenstromteilerventil eingesetzt, das eine gleichmäßige, fest eingestellte Aufteilung des Pumpenvolumenstroms auf beide Räder realisiert. Um bei Kurvenfahrt Verspannungen zu reduzieren, gibt es eine hydraulische Verbindung mit einer Düse zwischen beiden Hydraulikmotoren. Der Einsatz von Stromteilerventil und Düse verursacht erhebliche Verluste.

Bei einer Steuerungsanordnung dieser Art besteht in erster Linie die grundsätzliche Forderung, dass die zusätzlich angetriebenen Räder mit den Hauptantriebsrädern (Hinterrädern) gleich laufen, also sich bei gleicher Radgröße mit gleicher Drehzahl drehen. Dazu ist bei der Steuerungsanordnung gemäß DE 42 10 251 C2 vorgesehen, dass die Steuereinrichtung in Abhängigkeit der Drehzahlsignale der ständig angetriebenen Hinterräder über ein Stellglied (Proportional-Magnetventile) das Fördervolumen pro Umdrehung der Hydraulikstellpumpe einstellt, und dass ein weiterer Sensor zur Erfassung der Drehzahl des Antriebsmotors eingangsseitig mit der Steuereinrichtung verbunden ist, wobei die Steuereinrichtung die Drehzahl der Hydraulikmotoren durch die Einstellung des Fördervolumens pro Umdrehung der Hydraulikstellpumpe in Abhängigkeit des Verhältnisses der Drehzahl der ständig angetriebenen Hinterräder zur Drehzahl des Antriebsmotors festlegt. Diese Steuerungsanordnung hat sich in der Praxis zwar grundsätzlich bewährt, weist jedoch eine Reihe von Nachteilen auf.

Die bekannte Anordnung ist nur im Stand zu- und abschaltbar bzw. nur mit hohem technischen Aufwand aufgrund des konstanten Verdrängungsvolumens der Radialkolbenmotoren. Ferner ist nur eine eingeschränkte Anpassung (maximale Traktionskraft) an die Betriebsbedingungen, insbesondere in höheren Geschwindigkeitsbereichen, aufgrund des nicht stetig verstellbaren Verdrängungsvolumens der Radialkolbenmotoren möglich. Außerdem ist die Versorgung der beiden parallel angeordneten Radialkolbenmotoren prinzipbedingt wegen des erforderlichen Mengenteilerventils verlustbehaftet. Des Weiteren tritt durch die ungleichen Druckverluste in der Messblende des Stromteilerventils prinzipbedingt zusätzlich bei einer Gleichlaufsteuerung eine Drehzahlabweichung auf. Ferner versucht während des Lenkens (Radlenkung und/oder Knicklenkung) das Stromteilerventil den Gleichlauf aufrecht zu erhalten, was zur Verspannung der Räder führt und die Qualität des Arbeitsprozesses negativ beeinflusst. Schließlich ist sowohl in der Fertigung als auch beim Service ein sehr hoher manueller Aufwand für die Kalibrierung des Systems notwendig. Diese Kalibrierung ist erforderlich zur genauen Anpassung des Pumpenvolumenstromes an die Geschwindigkeit der Maschine unter Berücksichtigung des Lastzustandes und der Umgebungstemperaturen.

Neben dem vorbeschriebenen Einkreissystem sind heute im Wesentlichen Zweikreissysteme im Einsatz, d.h. es wird für jeden Radmotor eine Antriebspumpe und ein separater Hydraulikkreislauf verwendet. Der Gleichlauf der Räder muss über eine geeignete Ansteuerung beider Pumpen gewährleistet werden. Während des Lenkens benötigen beide Räder unterschiedliche volumenströme, sonst kommt es zu Verspannungen und negativen Einflüssen auf das Arbeitsergebnis. Bei Kurvenfahrt ist deshalb eine Lenkwinkelerfassung zwingend erforderlich, um beide Pumpen an den unterschiedlichen Volumenstrombedarf beider Räder anzupassen.

Aus US 2006/0065465 A1, US 5,420,791 A und US 6,644,429 B2 sind Schnellläuferaxialkolbenmotoren mit jeweils einem Planetenradgetriebe und einem 2-Pumpen-Konzept bekannt, bei welchem eine Kupplung zwischen Radgetriebe und Hydromotoren notwendig ist. Durch in Stufen schaltbare Axialkolbenmotoren mit minimalem verdrängungsvolumen größer Null sind zwei Kupplungen zwischen Hydraulikmotoren und Rädern erforderlich, um den Freilauf (Zu- und Abschalten) und Sicherheitsanforderungen zu gewährleisten, was einen hohen technischen Aufwand bedingt, zu geringer Zuverlässigkeit wegen Verschleißes führt und höhere Energieverluste verursacht. Diese Lösungen bedingen einen hohen technischen Aufwand und Kostenaufwand durch zwei getrennte Pumpen mit den entsprechenden zusätzlichen Elementen. Ferner ist ein hoher Steuerungsaufwand allgemein durch individuelle Ansteuerung der beiden Hydraulikpumpen gegeben. Des Weiteren besteht ein hoher Steuerungsaufwand bei Kurvenfahrt durch notwendige individuelle Aufteilung des Volumenstromes der beiden Hydraulikmotoren, da ansonsten ebenfalls eine Verspannung beider Räder gegeneinander auftritt.

Aus DE 101 01 748 B4 ist ein hydrostatischer Fahrantrieb für ein hydrostatisch angetriebenes Fahrzeug und ein Verfahren zur Traktionsverbesserung bekannt. Bei diesem Fahrantrieb werden die Achsen separat von je einem Hydraulikmotor angetrieben. Beide Hydraulikmotoren sind verstellbar und werden parallel von einer Verstellpumpe versorgt. Steuerungstechnisch sind beide Achsen gleichberechtigt. Es gibt keine prioritäre Achse. Beim Grader ist allerdings die Hinterachse der "Master". Die wesentliche Aufgabe einer Steuerung für die Vorderachse ist es, die Vorderräder auf die Hinterräder anzupassen, d.h. im normalen Betriebsmodus mit zugeschaltetem Vorderradantrieb wären die Vorderräder nicht in der Lage, die Maschine alleine zu bewegen. Die Steuerung gemäß DE 101 01 748 B4 ist darauf ausgerichtet, die Traktionsverhältnisse der Vorder- und Hinterräder zu überwachen und die Hydraulikmotoren so zu steuern, dass ein Durchrutschen der Achse vermieden bzw. die Traktion an den Achsen wieder erreicht wird. Dazu werden Drehzahlsensoren an den Achsen und Drucksensoren im Hauptkreis eingesetzt. Alle Informationen werden einer elektronischen Steuereinrichtung zugeführt, die in Abhängigkeit der Fahreranforderungen und Traktionsbedingungen die Hydraulikpumpe und die Hydraulikmotoren steuert. Diese bekannte Lösung betrifft jedoch keine gattungsgemäße Steuerungsanordnung für Fahrzeuge mit hydrostatischem Zusatzantrieb und einem Hauptantriebsmotor, sondern rein hydrostatisch angetriebene Fahrzeuge.

Aus US 4,444,286 A ist eine Steuerungsanordnung für Fahrzeuge mit hydrostatischem Zusatzantrieb, insbesondere für einen Grader, bekannt, bei dem für den Zusatzantrieb nur ein einziger Hydraulikmotor vorgesehen ist, der beide Räder des Zusatzantriebes antreibt. Eine solche Antriebsstruktur mit einer Hydraulikpumpe mit nur einem Hydraulikmotor ist technisch nicht vergleichbar mit einer Antriebsstruktur, die eine Hydraulikpumpe mit zwei parallelen Hydraulikmotoren aufweist, so dass diese Druckschrift keine gattungsgemäße Steuerungsanordnung offenbart.

Aus US 5,564,519 A ist eine Steuerungsanordnung für Fahrzeuge mit hydrostatischem Zusatzantrieb bekannt, bei der der Zusatzantrieb eine mit dem Antriebsmotor gekoppelte Hydraulikpumpe und zwei Hydraulikmotoren aufweist. Jeder Hydraulikmotor ist über eine Kupplung mit dem zugeordneten Rad verbunden. Wesentlich für diese Steuerungsanordnung ist die Kupplung zwischen dem jeweiligen Hydraulikmotor und dem von diesem angetriebenen Rad. Des Weiteren ist wesentlich, dass die Druckverhältnisse im System über Drucksensoren erfasst werden und die Steuerungseinrichtung in Abhängigkeit von den Drucksignalen wirksam ist. Diese Erfordernisse machen die bekannte Steuerungsanordnung sehr aufwendig.

Aufgabe der Erfindung ist es, eine Steuerungsanordnung der gattungsgemäßen Art derart weiter zu bilden, dass mit wesentlich geringerem Aufwand eine verbesserte Steuerung des hydrostatischen Zusatzantriebes ermöglicht wird.

Dabei soll insbesondere der technische Aufwand und Kosten- und Komponentenaufwand und der Steuerungsaufwand verringert, eine möglichst hohe Energieeffizienz erreicht und bisherige technische Limitierungen im Arbeitsprozess, wie Verspannungseffekte zwischen beiden mit dem Zusatzantrieb angetriebenen Rädern, beseitigt werden und es soll eine Zu- und/oder Abschaltung auch während der Fahrt möglich sein.

Diese Aufgabe wird bei einer Steuerungsanordnung der eingangs bezeichneten Art erfindungsgemäß dadurch gelöst, dass die Hydraulikpumpe und die Hydraulikmotoren elektrisch ansteuerbar und stetig verstellbar sind und die Hydraulikpumpe über Hydraulikleitungen ventillos direkt parallel mit den Hydraulikmotoren verbunden ist, dass jedem Hydraulikmotor jeweils ein Drehzahlsensor zugeordnet ist, dessen Drehzahlsignale jeweils der Steuereinrichtung zugeführt werden, und dass die Steuereinrichtung nur in Abhängigkeit von den Drehzahlsignalen der Sensoren das jeweilige Verdrängungsvolumen der Hydraulikmotoren steuert.

Die erfindungsgemäße Steuerungsanordnung verzichtet vollständig auf Ventile oder Stromteiler und dadurch bedingte Energieverluste. Dieses Prinzip hat den Vorteil, dass beide Hydraulikmotoren quasi über ein T-Stück mit der Hydraulikpumpe verbunden sind. Unterschiedlicher Volumenstrombedarf beider Hydraulikmotoren gleicht sich ohne zusätzliche Maßnahmen von selbst aus. Dies gilt insbesondere auch für eine Kurvenfahrt, der Volumenstrom verteilt sich automatisch unterschiedlich auf die beiden Hydraulikmotoren des kurveninneren und des kurvenäußeren Rades. Der Zusatzantrieb kann zu jedem beliebigen Zeitpunkt, also auch während der Fahrt, ohne zusätzliche Komponenten, wie Hydraulikventile oder Kupplungen, kostengünstig zu- und abgeschaltet werden. Durch die stufenlose Anpassung des Verdrängungsvolumens der Hydraulikmotoren können vorhandene Zugkraftreserven optimal genutzt werden. Der Gleichlauf der beiden parallel angeordneten Hydraulikmotoren erfolgt einfach, kostengünstig und prinzipbedingt ohne Drosselverluste eines Stromteilerventils. Prinzipbedingte Drehzahlunterschiede im Gleichlaufbetrieb werden durch den wegfall eines Stromteilerventils vermieden, so dass das Arbeitsergebnis dadurch nicht mehr beeinträchtigt wird. Durch die parallele Anordnung der Hydraulikmotoren werden Verspannungen während des Lenkens, die durch ein Stromteilerventil verursacht werden, vermieden und tragen erheblich zur Verbesserung des Arbeitsprozesses bei. Mit Hilfe einer automatischen Kalibrierung kann der Aufwand bei Fertigung und Service zur Anpassung des Pumpenvolumenstromes minimiert werden.

Die erfindungsgemäße Steuerungsanordnung weist einen konstruktiv sehr einfachen Aufbau ohne Kupplungen und die Notwendigkeit von Drucksensoren auf. Als steuerungstechnische Mittel werden ausschließlich das Pumpenvolumen und die Motorenvolumen verwendet. Die Steuerungseinrichtung baut unter allen Einsatzbedingungen nur auf der Auswertung der Drehzahlsignale und beim Vorhandensein eines Getriebes zwischen Antriebsmotor und den angetriebenen Hinterrädern des Getriebes bzw. der Gangwahl auf.

Dadurch, dass die Hydropumpe fest mit dem Antriebsmotor und die Hydromotoren fest mit den Vorderrädern verbunden sind, muss eine Abschaltung des Antriebssystems erfolgen, indem das Verdrängungsvolumen von Pumpen und Motoren stetig nach Null verstellt wird. Die Zuschaltung des Antriebssystems erfolgt in gleicher Weise, indem das Verdrängungsvolumen von Pumpen und Motoren stetig von Null vergrößert wird. Durch eine geeignete zeitliche Abstimmung der Stellwert-Rampen werden Druckspitzen vermieden, die den Arbeitsprozess negativ beeinflussen können bzw. Schäden an Komponenten hervorrufen können.

In ganz besonders bevorzugter Ausgestaltung ist vorgesehen, dass der hydrostatische Zusatzantrieb über die elektronische Steuereinrichtung zu- und abschaltbar ist. Dies kann jederzeit also auch während der Fahrt erfolgen. Deshalb sind keine zusätzliche Komponenten, Hydraulikventile und/oder -kupplungen notwendig.

Besonders bevorzugt ist vorgesehen, dass die Hydraulikpumpe eine Axialkolbenpumpe in Schrägscheiben- oder Schrägachsenbauart und die Hydraulikmotoren Axialkolbenmotoren in Schrägscheiben- oder Schrägachsenbauart sind, welche nach Null verstellbar sind.

Ferner ist in Ausgestaltung bevorzugt vorgesehen, dass der jeweilige Hydraulikmotor über ein Getriebe, insbesondere Planetengetriebe mit dem zugeordneten Rad verbunden ist.

Um eine ggf. gewünschte Traktion zu erreichen, ist ferner bevorzugt vorgesehen, dass der Volumenstrom der Hydraulikpumpe von der Steuereinrichtung in Abhängigkeit von der Drehzahl der Hinterräder und einem geringen zusätzlich manuell einstellbaren bzw. vorgebbaren Drehzahlanteil ermittel- und steuerbar ist.

Ferner sieht die Erfindung in Ausgestaltung bevorzugt vor, dass die Verdrängungsvolumina der Hydraulikmotoren in Anpassung an unterschiedliche Bodenbedingungen unterschiedlich einstellbar sind. Durch eine gezielte individuelle Beeinflussung der Verdrängungsvolumina beider Hydaulikmotoren und/oder der Hydraulikpumpe wird bei unterschiedlichen Bodenbedingungen an beiden Vorderrädern eine optimale Verteilung der Traktionskräfte gewährleistet. Das Durchrutschen eines der beiden Vorderräder wird dadurch wirksam verhindert, während die Zugkraft am anderen Vorderrad aufrechterhalten wird. Dies funktioniert auch, wenn beide Räder durchzurutschen drohen.

Bei hohen Fahrgeschwindigkeiten der Arbeitsmaschine erfolgt eine Anpassung des aktuell benötigten Volumenstromes der Hydraulikmotoren an den maximalen Volumenstrom der Hydraulikpumpe durch eine Verstellung des Verdrängungsvolumens der Hydraulikmotoren.

Der Hauptantrieb der Hinterräder der Arbeitsmaschine erfolgt über ein Getriebe (z.B. Lastschaltgetriebe mit Wandler oder parallelen Kupplungen, Getriebe mit kontinuierlich verstellbarer Übersetzung mit hydrostatischer, mechanischer oder elektrischer Leistungsübertragung oder leistungsverzweigte Getriebe mit mechanisch-hydrostatischer oder mechanisch-elektrischer verzweigung). Die Steuereinrichtung erfasst neben der Hinterraddrehzahl die Drehzahl des Antriebsmotors (insbesondere Dieselmotors) und ermittelt unabhängig vom gewählten Gang das aktuell erforderliche Verdrängungsvolumen der Hydraulikpumpe.

Es ist auch möglich, dass der Bediener der Arbeitsmaschine einen Betriebsmodus der Steuerungsanordnung auswählt, in welchem der Hauptantrieb neutral geschaltet wird und die Arbeitsmaschine allein durch die Vorderräder rein hydrostatisch angetrieben wird.

Wird der Zusatzantrieb abgeschaltet, drehen die Hydraulikpumpe und die Hydraulikmotoren ohne Druck und Volumenstrom mit der Motordrehzahl des Antriebsmotors bzw. der Radgetriebedrehzahl.

Die Erfindung ist nachstehend anhand der Zeichnung beispielhaft näher erläutert. Diese zeigt in
- Fig. 1: eine schematische Seitenansicht eines Graders,
- Fig. 2: ein vereinfachtes Blockschaltbild der erfindungsgemäßen Steuerungsanordnung und in
- Fig. 3: das Blockschaltbild nach Fig. 2 mit Signalstruktur.

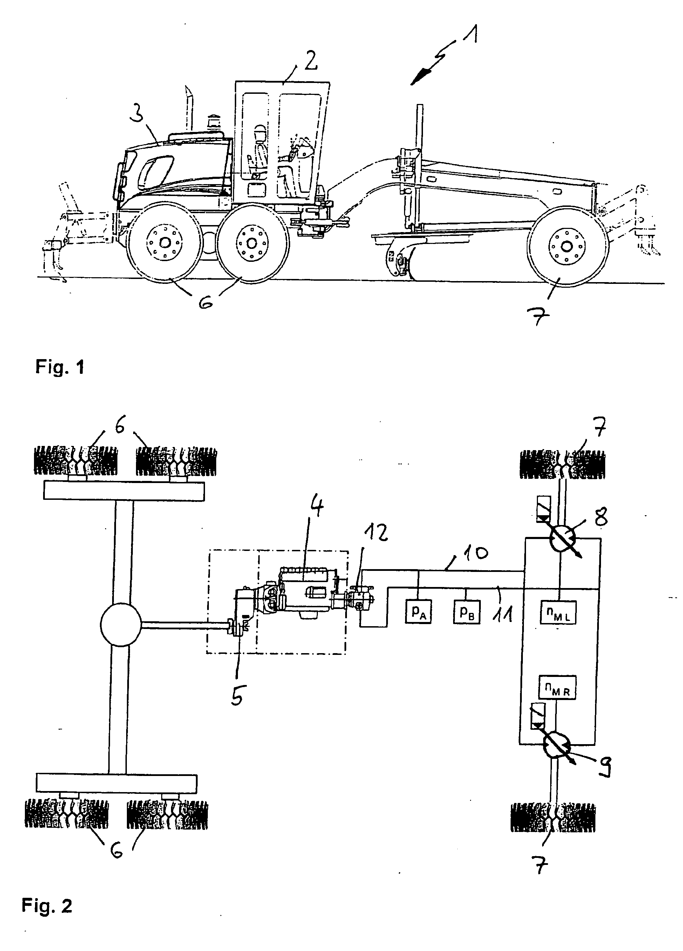

Die erfindungsgemäße Steuerungsanordnung wird nachfolgend am Beispiel des Einsatzes an einem Grader beschrieben, ist aber nicht auf eine solche Arbeitsmaschine beschränkt. Ein solcher Grader ist in Fig. 1 allgemein mit 1 bezeichnet.

Dieser Grader 1 weist hinter einer Fahrerkabine 2 ein Gehäuse 3 auf, in dem ein Antriebsmotor 4 (Fig. 2), vorzugsweise ein Dieselmotor, aufgenommen ist, welcher mit einem Schaltgetriebe 5 verbunden ist, das über einen Hauptantriebsstrang mit wenigstens zwei Hinterrädern 6 verbunden ist, d.h. die Hinterräder 6 werden über das Getriebe 5 vom Antriebsmotor 4 angetrieben.

Beim Ausführungsbeispiel sind insgesamt vier Hinterräder 6 vorgesehen, die an einer Tandemachse angeordnet sind.

Neben diesem Antriebsmotor 4 mit in der Regel ständig angetriebenen Hinterrädern 3 weist die Steuerungsanordnung des Graders 1 weiterhin einen zuschaltbaren hydrostatischen Zusatzantrieb für Vorderräder 7 auf. Dabei ist jedem Vorderrad 7 jeweils ein eigener Hydraulikmotor 8, 9 zugeordnet. Beide Hydraulikmotoren 8, 9 sind elektrisch ansteuerbar und stetig verstellbar, bevorzugt sind es Axialkolbenmotoren in Schrägscheibenbauart. Dabei ist bevorzugt zwischen dem jeweiligen Hydraulikmotor 8 bzw. 9 und dem Vorderrad 7 ein nicht dargestelltes Getriebe, z.B. Planetengetriebe, vorgesehen.

Beide Hydraulikmotoren 8, 9 sind parallel ventillos direkt über Hydraulikleitungen 10, 11 mit einer Hydraulikpumpe 12 verbunden, die ebenfalls elektrisch ansteuerbar und stetig verstellbar ist und bevorzugt als Axialkolbenpumpe in Schrägscheibenbauart ausgebildet ist. Diese Hydraulikpumpe 12 ist mit dem Antriebsmotor 4 gekoppelt.

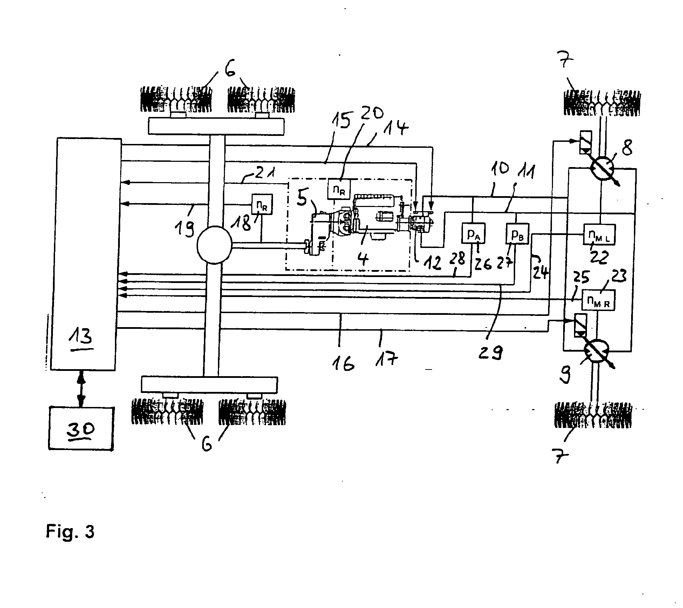

Wesentlicher Bestandteil der Steuerungsanordnung ist eine elektronische Steuereinrichtung 13 (Fig. 3), die über Pumpensteuerleitungen 14, 15 mit der Hydraulikpumpe 12 und über Steuerleitungen 16, 17 mit den Hydraulikmotoren 8, 9 verbunden ist.

Die Steuerungsanordnung weist darüber hinaus eine Mehrzahl von Drehzahlsensoren auf, nämlich einen Sensor 18 zur Erfassung der Drehzahl der Hinterräder 6, der über eine Signalleitung 19 mit der elektronischen Steuereinrichtung 13 verbunden ist. Des Weiteren ist ein Drehzahlsensor 20 zur Erfassung der Drehzahl des Antriebsmotors 4 vorgesehen, der über eine Signalleitung 21 mit der elektronischen Steuereinrichtung 13 in Verbindung steht.

Des Weiteren ist jedem Hydraulikmotor 8, 9 jeweils ein Drehzahlsensor 22, 23 zugeordnet, der jeweils über eine Signalleitung 24 bzw. 25 mit der elektronischen Steuereinrichtung 13 in Verbindung steht. Schließlich sind auch noch Drucksensoren 26, 27 in den Hydraulikleitungen 10 bzw. 11 vorgesehen, die über Signalleitungen 28, 29 mit der elektronischen Steuereinrichtung 13 verbunden sind. Diese Drucksensoren 26, 27 dienen nur zur Kalibrierung.

Erkennbar weist der hydrostatische Zusatzantrieb (Hydraulikpumpe 12, Hydraulikmotoren 7, 8 und Hydraulikleitungen 10, 11) keine zusätzlichen Komponenten, wie Ventile, Drosseln oder dgl. auf, die Steuerungsanordnung kann zu jedem beliebigen Zeitpunkt, also auch während der Fahrt des Graders 1 ohne zusätzliche Komponenten, Hydraulikventile, Kupplungen und dgl. zu- und abgeschaltet werden. Ist der Zusatzantrieb abgeschaltet, drehen die Hydraulikpumpe 12 und die Hydraulikmotoren 8, 9 ohne Druck und Volumenstrom mit der Drehzahl des Antriebsmotors 4 bzw. des Schaltgetriebes 5.

Der Fahrer kann den hydrostatischen Zusatzantrieb über eine mit der Steuereinrichtung 13 verbundene Bedieneinrichtung 30 zu- und abschalten. Die Steuereinrichtung 13 erhöht dabei stetig die Verdrängungsvolumina der Hydraulikpumpe 12 und der Hydraulikmotoren 8, 9 von Null auf den berechneten Wert und verringert diese beim Abschalten wieder stetig auf Null.

Der Fahrer kann ebenfalls über die Bedieneinrichtung 30 die Traktion an den Vorderrädern 7 gegenüber den Hinterrädern 6 verändern. Die Steuereinrichtung 13 rechnet dieses Einstellsignal in ein zusätzliches Verdrängungsvolumen der Hydraulikpumpe 12 um, welches eine zusätzliche Drehzahl der Vorderräder 7 zur Folge hat. Diese zusätzliche Drehzahl kann im Extremfall bis zu 30 % über dem Wert der Hinterräder 6 liegen.

Zur Bestimmung des Volumenstromes der Hydraulikpumpe 12 erfolgt über den Sensor 18 eine Messung der Drehzahl der Hinterräder 6 in der Art, dass die Vorderräder 7 in ihrer Drehzahl den Hinterrädern 6 folgen, vorzugsweise zuzüglich einer geringen zusätzlich manuell einstellbaren Drehzahl für zusätzlich gewünschte Traktion.

Bei hohen Fahrgeschwindigkeiten des Graders 1 erfolgt bevorzugt eine Anpassung des aktuell benötigten Volumenstromes der Hydraulikmotoren 8, 9 an den maximalen Volumenstrom der Hydraulikpumpe 12 durch eine Verstellung des Verdrängungsvolumens der Hydraulikmotoren 8, 9.

Der Hauptantrieb der Hinterräder 6 des Graders 1 erfolgt über das Getriebe 5 (Lastschaltgetriebe mit Wandler oder parallelen Kupplungen, Getriebe mit kontinuierlich verstellbarer Übersetzung mit hydrostatischer, mechanischer oder elektrischer Leistungsübertragung oder leistungsverzweigte Getriebe mit mechanisch-hydrostatischer oder mechanisch-elektrischer Verzweigung). Die elektronische Steuereinrichtung 13 erfasst neben der Drehzahl der Hinterräder 6 über den Sensor 18 auch die Drehzahl des Antriebsmotors 4 über den Sensor 20 und berechnet unabhängig vom gewählten Gang das aktuell erforderliche Verdrängungsvolumen der Hydraulikpumpe 12.

Durch eine gezielte Beeinflussung der Verdrängungsvolumina beider Hydraulikmotoren 8, 9 wird bei unterschiedlichen Bodenbedingungen an beiden Vorderrädern 7 eine optimale Verteilung der Traktionskräfte gewährleistet. Das Durchrutschen eines der beiden Vorderräder 7 wird dadurch wirksam verhindert, während die Zugkraft am anderen Vorderrad 7 aufrechterhalten wird.

Der Bediener der Arbeitsmaschine, d.h. des Graders 1, kann auch einen Betriebsmodus wählen, in welchem der Hauptantrieb (Schaltgetriebe 5) neutral geschaltet wird und der Grader 1 allein durch die Vorderräder 7 rein hydrostatisch angetrieben wird.

## Patentansprüche

1. Steuerungsanordnung für Fahrzeuge mit hydrostatischem Zusatzantrieb für eine oder mehrere Achsen, insbesondere für Grader, mit
- einem Antriebsmotor (4),
- angetriebenen Hinterrädern (6), die mit dem Antriebsmotor (4) gekoppelt sind,
- über zugeordnete Hydraulikmotoren (8,9) zuschaltbare weitere Räder (7), die von einer mit dem Antriebsmotor (4) gekoppelten Hydraulikpumpe (12) mit verstellbarem Fördervolumen betreibbar sind, wobei jedes Rad (7) kupplungslos mit einem Hydraulikmotor (8 oder 9) verbunden ist,
- einem Sensor (18) zur Erfassung der Drehzahl der Hinterräder (6) und einem Sensor (20) zur Erfassung der Drehzahl des Antriebsmotors (4),
- einer elektronischen Steuereinrichtung (13), der die Drehzahlsignale der Hinterräder (6) und des Antriebsmotors (4) zugeführt werden und die in Abhängigkeit der Drehzahlsignale die Hydraulikmotoren (8,9) steuert,
**dadurch gekennzeichnet,**
**dass** die Hydraulikpumpe (12) und die Hydraulikmotoren (8,9) elektrisch ansteuerbar und stetig verstellbar sind und die Hydraulikpumpe (12) über Hydraulikleitungen (10, 11) ventillos direkt parallel mit den Hydraulikmotoren (8,9) verbunden ist, dass jedem Hydraulikmotor (8,9) jeweils ein Drehzahlsensor (22,23) zugeordnet ist, dessen Drehzahlsignale jeweils der Steuereinrichtung (13) zugeführt werden, und dass die Steuereinrichtung (13) nur in Abhängigkeit von den Drehzahlsignalen der Sensoren (18, 20,22,23) das jeweilige Verdrängungsvolumen der Hydraulikmotoren (8,9) steuert.

2. Steuerungsanordnung nach Anspruch 1,
**dadurch gekennzeichnet,**
**dass** der hydrostatische Zusatzantrieb (8,9,12) über die elektronische Steuereinrichtung (13) in jedem beliebigen Betriebszustand zu- und abschaltbar ist.

3. Steuerungsanordnung nach Anspruch 1 oder 2,
**dadurch gekennzeichnet,**
**dass** die Hydraulikpumpe (12) eine Axialkolbenpumpe in Schrägscheiben- oder Schrägachsenbauart ist.

4. Steuerungsanordnung nach Anspruch 1, 2 oder 3,
**dadurch gekennzeichnet,**
**dass** die Hydraulikmotoren (8,9) Axialkolbenmotoren in Schrägscheiben- oder Schrägachsenbauart sind.

5. Steuerungsanordnung nach einem oder mehreren der Ansprüche 1 bis 4,
**dadurch gekennzeichnet,**
**dass** der jeweilige Hydraulikmotor (8,9) über ein Getriebe mit dem zugeordneten Rad (7) verbunden ist.

6. Steuerungsanordnung nach einem oder mehreren der Ansprüche 1 bis 5,
**dadurch gekennzeichnet,**
**dass** der Volumenstrom der Hydraulikpumpe (12) von der Steuerungseinrichtung (13) in Abhängigkeit von der Drehzahl der Hinterräder (6) und einem geringen zusätzlich manuell einstellbaren bzw. vorgebbaren Drehzahlanteil ermittel- und steuerbar ist.

7. Steuerungsanordnung nach einem oder mehreren der Ansprüche 1 bis 6,
**dadurch gekennzeichnet,**
**dass** die Verdrängungsvolumina der Hydraulikmotoren (8,9) und/oder der Hydraulikpumpe (7) in Anpassung an unterschiedliche Bodenbedingungen unterschiedlich einstellbar sind.

## Claims

1. Control arrangement for vehicles comprising a hydrostatic auxiliary drive for one or more axles, in particular for graders, comprising a drive motor (4), driven rear wheels (6) which are coupled with the drive motor (4), further wheels (7) which can be activated by means of corresponding hydraulic motors (8, 9) and which can be operated by a hydraulic pump (12) coupled with the drive motor (4), and comprising an adjustable feed volume, wherein each wheel (7) is connected to a hydraulic motor (8 or 9) without a clutch, a sensor (18) for detecting the speed of the rear wheels (6) and a sensor (20) for detecting the speed of the drive motor (4), an electronic control device (13) which receives the speed signals from the rear wheels (6) and the drive motor (4), and which controls the hydraulic motors (8, 9) according to the speed signals, **characterised in that** the hydraulic pump (12) and the hydraulic motors (8, 9) can be controlled electrically and can be adjusted in a continuously variable manner, and the hydraulic pump (12) is connected directly, without valves, in parallel with the hydraulic motors (8, 9) by means of hydraulic lines (10, 11), **in that** a respective speed sensor (22, 23) is assigned to each hydraulic motor (8, 9), each speed signal of said sensors being received by the-control device (13), and **in that** the control device (13) controls the respective displacement volume of the hydraulic motors (8, 9) only according to the speed signals of the sensors (18, 20, 22, 23).

2. Control arrangement according to claim 1, **characterised in that** the hydrostatic auxiliary drive (8, 9, 12) can be activated and deactivated by the electronic control device (13) in any given operating state.

3. Control arrangement according to either claim 1 or claim 2, **characterised in that** the hydraulic pump (12) is an axial piston pump having tilted discs or tilted axles.

4. Control arrangement according to claim 1, claim 2 or claim 3, **characterised in that** the hydraulic motors (8, 9) are axial piston motors having tilted discs or tilted axles.

5. Control arrangement according to one or more of claims 1 to 4, **characterised in that** each hydraulic motor (8, 9) is connected to the corresponding wheel (7) by a gear box.

6. Control arrangement according to one or more of claims 1 to 5, **characterised in that** the volume flow rate of the hydraulic pump (12) can be detected and controlled by the control device (13) according to the speed of the rear wheels (6) and a small fraction of the speed which can additionally be manually adjusted or predetermined.

7. Control arrangement according to one or more of claims 1 to 6, **characterised in that** the displacement volumes of the hydraulic motors (8, 9) and/or the hydraulic pump (7) can be adjusted differently to adapt to different ground conditions.

## Revendications

1. Dispositif de commande pour véhicules à entraînement hydrostatique auxiliaire pour un ou plusieurs essieux, en particulier pour niveleuse, comprenant :
- un moteur d'entraînement (4),
- des roues arrière entraînées (6), qui sont couplées au moteur d'entraînement (4),
- d'autres roues (7) qui peuvent raccordées via des moteurs hydrauliques affectés (8, 9) et qui peuvent être actionnées par une pompe hydraulique (12) à volume de circulation réglable couplée au moteur d'entraînement (4), chaque roue (7) étant raccordée à un moteur hydraulique (8 ou 9) sans accouplement,
- un capteur (18) pour détecter la vitesse de rotation des roues arrière (6) et un capteur (20) pour détecter la vitesse de rotation du moteur d'entraînement (4),
- un dispositif de commande électronique (13) auquel les signaux de vitesse de rotation des roues arrière (6) et du moteur d'entraînement (4) sont acheminés et qui commande les moteurs hydrauliques (8, 9) en fonction des signaux de vitesse de rotation,
**caractérisé en ce que**
la pompe hydraulique (12) et les moteurs hydrauliques (8, 9) peuvent être commandés par voie électrique et réglés en permanence et la pompe hydraulique (12) est raccordée via des conduites hydrauliques (10, 11) sans soupape directement en parallèle avec les moteurs hydrauliques (8, 9), **en ce qu'**à chaque moteur hydraulique (8, 9) est respectivement affecté un capteur de vitesse de rotation (22, 23), dont les signaux de vitesse de rotation sont acheminés respectivement au dispositif de commande (13), et **en ce que** le dispositif de commande (13) ne commande le volume de déplacement respectif des moteurs hydrauliques (8, 9) qu'en fonction des signaux de vitesse de rotation des capteurs (18, 20, 22, 23).

2. Dispositif de commande selon la revendication 1,
**caractérisé en ce que**
l'entraînement hydrostatique auxiliaire (8, 9, 12) peut être enclenché et déclenché dans un état quelconque de fonctionnement via le dispositif de commande électronique (13).

3. Dispositif de commande selon la revendication 1 ou la revendication 2,
**caractérisé en ce que**,
la pompe hydraulique (12) est une pompe à piston axial du type à plateau incliné ou à axe incliné.

4. Dispositif de commande selon la revendication 1, 2 ou 3,
**caractérisé en ce que**
les moteurs hydrauliques (8, 9) sont des moteurs à piston axial du type à plateau incliné ou à axe incliné.

5. Dispositif de commande selon une ou plusieurs des revendications 1 à 4,
**caractérisé en ce que**,
le moteur hydraulique respectif (8, 9) est raccordé à la roue affectée (7) via un engrenage.

6. Dispositif de commande selon une ou plusieurs des revendications 1 à 5,
**caractérisé en ce que**,
le courant volumique de la pompe hydraulique (12) peut être déterminé ou commandé par le dispositif de commande (13) en fonction de la vitesse de rotation des roues arrière (6) et d'une faible fraction de vitesse de rotation qui peut être réglée ou prédéterminée manuellement en plus.

7. Dispositif de commande selon une ou plusieurs des revendications 1 à 6,
**caractérisé en ce que**,
les volumes de déplacement des moteurs hydrauliques (8, 9) et/ou de la pompe hydraulique (7) peuvent être différemment réglés en fonction de différentes conditions au sol.
